# EUROPEAN PATENT SPECIFICATION

(11) **EP 4 349 497 B1**
(45) Date of publication and mention of the grant of the patent: **15.07.2026**
(21) Application number: 23201443.1
(22) Date of filing: 03.10.2023
(51) Int. Cl.: B29C 65/10, B06B 1/06, B23K 20/10, B29C 65/08, B29C 65/00

(54) **CONVERTER FOR AN ULTRASONIC WELDING DEVICE HAVING INCREASED ARC RESISTANCE**
UMRICHTER FÜR EINE ULTRASCHALLSCHWEISSVORRICHTUNG MIT ERHÖHTER LICHTBOGENBESTÄNDIGKEIT
CONVERTISSEUR POUR UN DISPOSITIF DE SOUDAGE PAR ULTRASONS AYANT UNE RÉSISTANCE À L'ARC ACCRUE

(30) Priority: 04.10.2022 US 202217960113
(43) Date of publication of application: 10.04.2024
(73) Proprietor: Branson Ultrasonics Corporation, Brookfield, CT 06804 (US)
(72) Inventor: CALDWELL, Scott, New Milford, 06776 (US); MANECA, John, Waterbury, 06706 (US); POLLASTRO, Eugene D, Bethel, 06801 (US)
(74) Representative: J A Kemp LLP

(56) References cited:
- US-A1- 2007 080 609
- US-A1- 2007 170 820
- ANONYMOUS: "Piezoelectric transducer design | Ultrasonic Resonators", 6 January 2022 (2022-01-06), pages 1 - 55, XP093084546, Retrieved from the Internet <URL:http://www.ultrasonic-resonators.org/design/transducers/transducer_design.html> [retrieved on 20230921]

## Description

### FIELD

The present disclosure relates to an ultrasonic device and more particularly to a converter for an ultrasonic welding device having an increased arc resistance.

### BACKGROUND

This section provides background information related to the present disclosure which is not necessarily prior art.

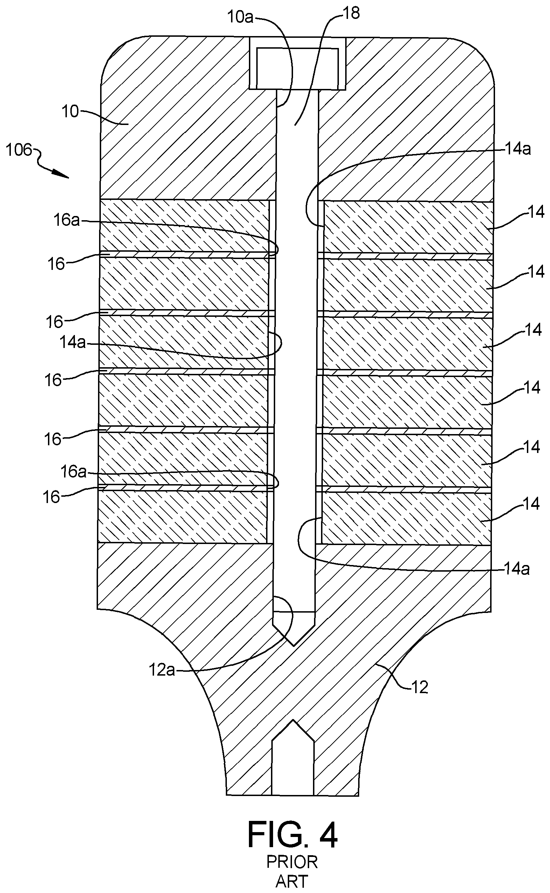

Ultrasonic converters, which are common in the ultrasonic welding art, use piezo material to convert electrical power into ultrasonic mechanical motion. A typical design of a relatively high-power converter, also common in the art, is shown in Figure 4. The converter includes a stack of disk-shaped piezo rings 14, electrode plates 16 between the rings 14, a back driver mass 10, and a front driver mass 12 that are all held together under tension by a bolt 18 down the center.

One of the factors that can lead to the design of a more powerful converter for ultrasonic welding is the increase of voltage applied to the piezo disks in a converter. There is a physical limit as to the practical maximum voltage that can be supplied in that, beyond the limit, arcing begins to occur between the plates that supply the voltage that are typically located between the piezo disks. These arcs usually travel on the surfaces of the ends of the piezo disks. In the present art, the path length of the surfaces at the inside and outside ends of these disks is a straight line which has the least possible resistance to arc over.

One of the methods in the prior art to help mitigate the arc over is to use insulating coatings on the outside of the piezo stack. Typically, a high-power piezo stack has a hole down its center to accommodate a bolt that holds the stack together under compression. In the prior art, this hole is not coated because of the difficulty of applying the coating after assembly of the stack. If the coating is applied before assembly and dries, when the bolt is applied, the coating cracks. If the coating is applied wet before assembly, when the bolt is inserted, which is typically done manually, coating gets on the bolt which prevents assembly.

Piezoelectric transducer design | Ultrasonic Resonators (http://www.ultrasonic-resonators.org/design/transducers/transducer_design.html), US 2007/080609 and US 2007/170820 disclose background art.

### SUMMARY

This section provides a general summary of the disclosure, and is not a comprehensive disclosure of its full scope or all of its features.

One aspect of the present disclosure is to increase the arc path length of the end surfaces on the piezo material so that the resistance to arc over between the plates is increased, thus allowing for more powerful converter designs.

Another aspect of the present disclosure is to apply an insulating coating wet on the inside of any holes down its inside of the piezo stack before the stack is assembled. A jigging is used to hold the stack precisely in place. The compression bolt(s) that go inside this/these hole(s) is/are precisely placed mechanically to avoid contact with the wet coating, and then tightened while the coating is wet. The whole assembly is then allowed to dry. This also increases resistance to arc over, thus also allowing more powerful converter designs.

A converter for an ultrasonic welder includes at least one piezoelectric disk. Optionally, the converter may include a stack of piezoelectric disks alternately stacked with metal conductor disks in between. A pair of driver plates are disposed on opposite ends of the stack of piezoelectric disks. Each piezoelectric disk includes an undulating outer perimeter surface such that a linear distance along the outer perimeter surface from one edge of the outer perimeter surface to the other edge is greater than a thickness of the piezoelectric disk.

Optionally, the undulating outer perimeter surface of the piezoelectric disks are rounded.

Optionally, the undulating outer perimeter surface of the piezoelectric disks undulate radially outward.

Optionally, the undulating outer perimeter surface of the piezoelectric disks undulate radially inward.

Optionally, the undulating outer perimeter surface is coated with an insulating coating.

Optionally, each of the piezoelectric disks include an aperture therethrough with an undulating inner perimeter surface such that a linear distance along the inner perimeter surface from one edge of the inner perimeter surface to the other edge is greater than the thickness of the at least one piezoelectric disk.

Optionally, the undulating inner perimeter surface is coated with an insulating coating.

Optionally, at least one piezoelectric disk includes an aperture therethrough with an undulating inner perimeter surface such that a linear distance along the inner perimeter surface from one edge of the inner perimeter surface to the other edge is greater than thickness of the at least one piezoelectric disk.

Optionally, the inner perimeter surface is coated with an insulating coating.

Optionally, the outer perimeter surface is coated with an insulating coating.

The outer perimeter surface of the at least one piezoelectric disk has an undulating surface.

Optionally, the inner perimeter surface of the aperture in the at least one piezoelectric disk has an undulating surface.

There is disclosed a method of assembling a converter for an ultrasonic welder, wherein the method comprises: placing at least one piezoelectric disk between a first driver plate and a second driver plate and all within a jig, the at least one piezoelectric disk having at least one hole; applying a liquid insulating coating inside the at least one hole of the piezoelectric disk while the at least one piezoelectric disk and the first driver plate and the second driver plate are held secure by the jig; and inserting a bolt through a hole in the first driver plate, the hole in the at least one piezoelectric disk and tightening the bolt into a threaded hole in the second driver plate to create an assembled converter.

The at least one piezoelectric disk has an undulating outer perimeter surface such that a linear distance along the outer perimeter surface from one edge of the outer perimeter surface to the other edge is greater than a thickness of the at least one piezoelectric disk.

The method optionally further comprising applying a liquid insulating coating to an exterior surface of the assembled converter.

The outer perimeter surface of the at least one piezoelectric disk has an undulating surface.

Optionally, the hole in the at least one piezoelectric disk has an undulating inner perimeter surface such that a linear distance along the inner perimeter surface from one edge of the inner perimeter surface to the other edge is greater than a thickness of the at least one piezoelectric disk.

Optionally, the inner perimeter surface of the hole in the at least one piezoelectric disk has an undulating surface.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a schematic view of a workpiece processing device according to an example embodiment that is useful for understanding the invention;
FIG. 2 is a cross-sectional view of a converter according to the principles of the present disclosure;
FIGS. 3A-3D are schematic views illustrating an assembly process of a converter according to the principles of the present disclosure;
FIG. 4 is a cross-sectional view of a conventional converter; and
FIG. 5A-5D are example cross-sectional views of alternative crosssections of edge surfaces of the piezoelectric disks.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected, or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer, or section. Terms such as "first," "second," and other numerical terms when used herein do not imply a sequence or order unless clearly indicated by the context. Thus, a first element, component, region, layer, or section discussed below could be termed a second element, component, region, layer, or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

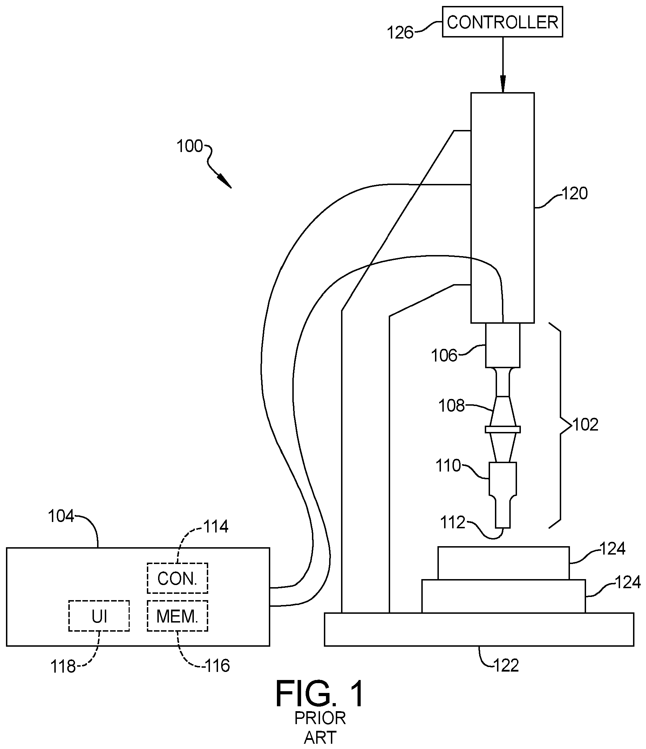

With reference to FIG. 1, a model of a typical prior art ultrasonic system 100 having an ultrasonic stack 102 and ultrasonic power supply 104 is shown. It should be understood that ultrasonic system 100 can be any type of ultrasonic system that has an ultrasonic stack excited by an ultrasonic power supply. Typical components of ultrasonic stack 102 include an ultrasonic converter 106, a booster 108 and an ultrasonic horn 110. It should be appreciated that not every ultrasonic stack 102 includes booster 108. It should be further appreciated that not every ultrasonic stack 102 includes ultrasonic horn 110. Ultrasonic horn 110 will often have one or more ultrasonic horn tip (not shown). Booster 108 and ultrasonic horn 110 are ultrasonically connected (directly or via another component) to ultrasonic converter 106. In the example of FIG. 1, booster 108 is mounted to ultrasonic converter 106 ultrasonically connecting booster 108 to ultrasonic converter 106, and ultrasonic horn 110 is mounted to booster 108 ultrasonically connecting ultrasonic horn 110 to booster 108, and thus ultrasonically connecting ultrasonic horn 110 to ultrasonic converter 106 via booster 108.

Power supply 104 is controlled by a controller 114 that includes memory 116. It should be understood that controller 114 can be included in power supply 104 or separate from power supply 104.

Ultrasonic system 100 will often include an anvil 122 on which a work piece to be processed will be supported and contacted by ultrasonic horn tip 112 when it is being processed. For example, if two metal or plastic parts 124 are being welded together, they are supported on anvil 122 and pressed together by the ultrasonic horn tip during the weld process as actuator 120 moves ultrasonic stack 102 relative to the two parts 124 where the horn tip also ultrasonically vibrates against one of the parts to ultrasonically weld the two parts 124 together. Actuator 120 is controlled by a controller 126 which may be a separate controller from controller 114 of ultrasonic power supply 104 or controller 114 of ultrasonic power supply 104 may control actuator 120.

With reference to the cross-sectional view of FIG. 4, a converter 106 according to the conventional art will now be described. The converter 106 includes a back driver 10 and a front driver 12 which can each be formed from metal. A plurality of piezoelectric disks 14 are stacked alternately with metal conductor disks 16 in between. Although a stack of piezoelectric disks 14 and metal conductor disks are shown, it should be understood that a single piezoelectric disk 14 can be utilized between the back driver 10 and the front driver 12. The piezoelectric disks or disk 14 can be formed from a piezoelectric ceramic material. The converter 106 can be held together by a bolt 18 inserted through a hole 10a in the back driver 10, a hole 14a in each of the piezoelectric disks 14, a hole 16a in each of the metal conductor disks 16 and threadedly engaged with a threaded aperture 12a in the front driver 12.

One of the factors that can lead to the design of a more powerful converter 106 is an increase of voltage applied to the piezoelectric disks 14 in a converter. There is a physical limit as to the practical maximum voltage that can be supplied in that, beyond the limit, arcing begins to occur between the metal conductor disks 16 that supply the voltage that are located between the piezoelectric disks 14. These arcs usually travel on the surfaces of the outer diameter surface of the piezoelectric disks and the inner diameter surface of the holes of the piezoelectric disks 14. In the present art, as shown in FIG. 4, the path length of the surfaces at the inside and outside surfaces of these disks 14 is a straight line which has the least possible resistance to arc over.

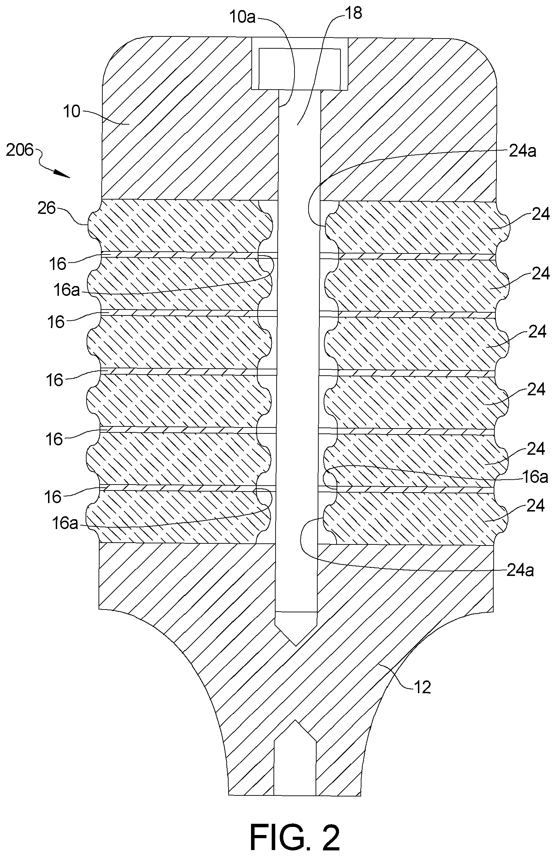

With reference to FIG. 2, a cross-sectional view of an example converter 206 according to the principles of the present disclosure is shown. Similar to conventional converter 106, the converter 206 according to the present example disclosure includes a back driver 10 and a front driver 12 which can each be formed from metal. A plurality of piezoelectric disks 24 are stacked alternately with metal conductor disks 16 in between. The piezoelectric disks 24 can be formed from a piezoelectric ceramic material or other piezoelectric material. The converter 206 can be held together by a bolt 18 inserted through a hole 10a in the back driver 10, a hole 24a in each of the piezoelectric disks 24, a hole 16a in each of the metal conductor disks 16 and threadedly engaged with a threaded aperture 12a in the front driver 12.

The piezoelectric disks 24 include an outer perimeter surface 26 that is provided with an undulating surface that increases the arc length along the outer perimeter surface 26. The "arc length" is the linear distance along the outer perimeter surface from one edge of the outer perimeter surface to the other edge. In the prior art of FIG. 4, because the outer perimeter surface of the piezoelectric disks 14 is a cylindrical surface, the arc length is equal to a thickness of the piezoelectric disks 14. In contrast, the piezoelectric disks 24 of the present example have an undulating outer perimeter surface 26 in order to increase the linear distance along the outer perimeter surface and therefore increases the arc length as compared to a thickness of the piezoelectric disks 24. One aspect of the present disclosure is to increase the path length of these end surfaces on the piezo material so that the resistance to arc over between the plates is increased, thus allowing for more powerful converter designs.

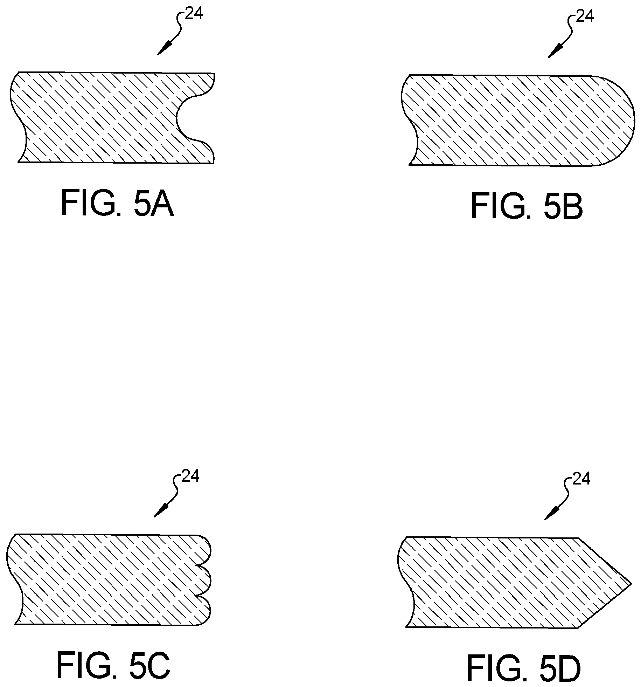

The embodiment of the undulating surfaces shown in Figure 2 is one method of increasing path length on the end surfaces. Any geometry that can increase the path length (and thus the arc length) of the piezo edges over that of a straight line can be used as an alternate embodiment. Accordingly, as shown in FIG. 5A, the undulating surfaces can be reversed so that they undulate inward instead of outward. Yet another example embodiment as shown in FIG. 5B is to have the surfaces just rounded. This has the advantage of ease of manufacture. Alternatively, as shown in FIG. 5C, the outer perimeter surface can be scalloped. Yet another embodiment as shown in FIG 5D is to have the surfaces pointed, which has the advantage of ease of manufacture. Alternatively, the surfaces can be pointed inward. All the above embodiments can be repeated over the surfaces or can be combined in any combination over the surfaces. A preferred shape of the piezo material is substantially a disk-like ring. Alternatively, the outside shape of the piezoelectric disks 24 need not be circular-it can be any shape.

One of the methods in the prior art to help mitigate the arc over is to use insulating coatings on the outside of the piezo stack. Typically, a high-power piezo stack has a hole down its center to accommodate a bolt that holds the stack together under compression. In the prior art, this hole is not coated because of the difficulty of applying the coating after assembly of the stack. If the coating is applied before assembly and dries, when the bolt is applied, the coating cracks when the disks are compressed. If the coating is applied wet before assembly, when the bolt is applied, which is typically done manually, the coating gets on the bolt which prevents assembly.

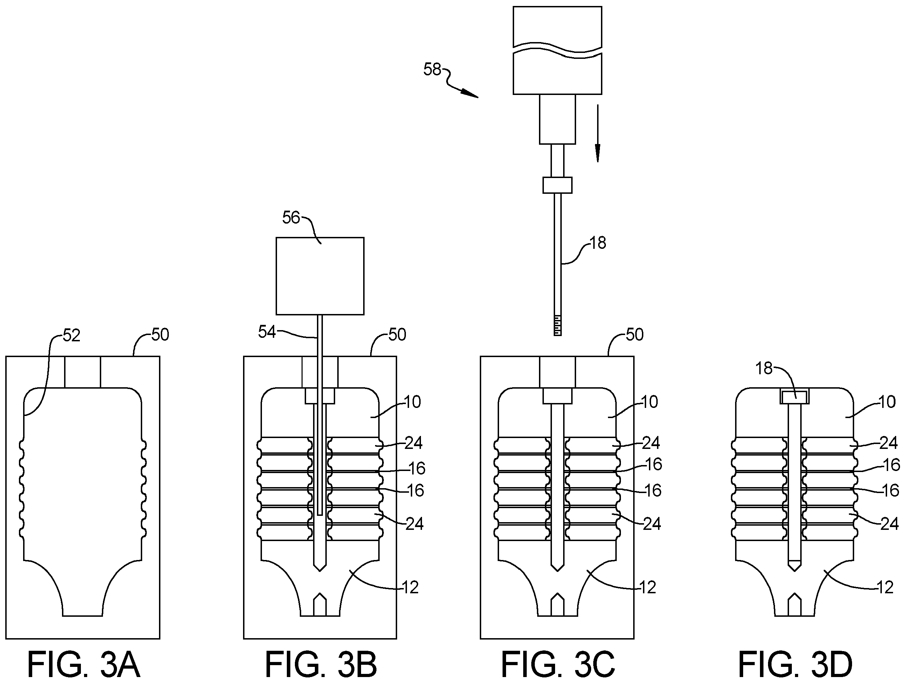

Another aspect of the invention is to apply an insulating coating wet on an inside of any holes of the piezoelectric stack before the stack is assembled. With reference to FIGS. 3(a)-3(d) an assembly process for the converter is shown. As shown in FIG. 3(a), a fixture or jig 50 is shown including a cavity 52. As shown in FIG. 3(b), the components 10, 12, 24, 16 of the converter assembly are inserted into the cavity 52 of the jig 50 in stacked relationship. As further shown in FIG 3(b) a spray nozzle 54 can then be inserted into the holes 10a, 24a, and 16a of the components 10, 24 and 16 and a spray of insulating coating can be applied inside of the holes 10a, 24a, 16a by a spray device 56. As shown in FIG. 3(c) the bolt 18 can be mechanically placed precisely within the holes by an automated system 58 to avoid contact with the wet coating and can be threadedly engaged with the threaded aperture 12a in the front driver 12 while the coating is wet. The converter assembly 24 can then be removed from the jig 50 and the exterior surface can also be coated with the insulating coating. The whole assembly 24 is then allowed to dry. The insulating coating increases resistance to arc over both on the exterior and interior thereof, thus also allowing more a powerful converter design.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A converter (206) for an ultrasonic welder, comprising:
at least one piezoelectric disk (24);
a pair of driver plates (10, 12) disposed on opposite ends of the at least one piezoelectric disk;
wherein the at least one piezoelectric disk includes an undulating outer perimeter surface (26) such that a linear distance along the outer perimeter surface from one edge of the outer perimeter surface to the other edge is greater than a thickness of the at least one piezoelectric disk.

2. The converter according to claim 1, wherein at least one piezoelectric disk includes an aperture therethrough with an undulating inner perimeter surface such that a linear distance along the inner perimeter surface from one edge of the inner perimeter surface to the other edge is greater than the thickness of the at least one piezoelectric disk.

3. The converter according to claim 2, wherein the inner perimeter surface is coated with an insulating coating.

4. The converter according to any one of the preceding claims, wherein the outer perimeter surface is coated with an insulating coating.

5. The converter according to claim 1, further comprising:
a stack of piezoelectric disks (24) as defined in claim 1, alternately stacked with metal conductor disks (16) in between.

6. The converter according to claim 5, wherein the undulating outer perimeter surface of the piezoelectric disks are rounded.

7. The converter according to claim 5 or claim 6, wherein the undulating outer perimeter surface of the piezoelectric disks is formed by a radially outward undulation.

8. The converter according to any one of the preceding claims 5 to 6, wherein the undulating outer perimeter surface of the piezoelectric disks is formed by a radially inward undulation.

9. The converter according to any one of the preceding claims 5 to 8, wherein each of the piezoelectric disks includes an aperture therethrough with an undulating inner perimeter surface such that a linear distance along the inner perimeter surface from one edge of the inner perimeter surface to the other edge is greater than the thickness of the at least one piezoelectric disk.

10. A method of assembling a converter for an ultrasonic welder comprises:
placing at least one piezoelectric disk (24) between a first driver plate and a second driver plate (10, 12) and all within a jig (50), the at least one piezoelectric disk having at least one hole;
applying a liquid insulating coating inside the at least one hole of the piezoelectric disk while the at least one piezoelectric disk and the first driver plate and the second driver plate are held secure by the jig; and
inserting a bolt (18) through a hole in the first driver plate, the hole in the at least one piezoelectric disk and tightening the bolt into a threaded hole in the second driver plate to create an assembled converter;
wherein the at least one piezoelectric disk has an undulating outer perimeter surface (26) such that a linear distance along the outer perimeter surface from one edge of the outer perimeter surface to the other edge is greater than a thickness of the at least one piezoelectric disk.

11. The method according to claim 10, further comprising applying a liquid insulating coating to an exterior surface of the assembled converter.

12. The method according to claim 10 or claim 11, wherein the hole in the at least one piezoelectric disk has an undulating inner perimeter surface such that a linear distance along the inner perimeter surface from one edge of the inner perimeter surface to the other edge is greater than a thickness of the at least one piezoelectric disk.

## Patentansprüche

1. Konverter (206) für einen Ultraschallschweißer, umfassend:
mindestens eine piezoelektrische Scheibe (24);
ein Paar Treiberplatten (10, 12), die an gegenüberliegenden Enden der mindestens einen piezoelektrischen Scheibe angeordnet sind;
wobei die mindestens eine piezoelektrische Scheibe eine wellenförmige Außenumfangsfläche (26) beinhaltet, sodass eine lineare Distanz entlang der Außenumfangsfläche von einer Kante der Außenumfangsfläche zu der anderen Kante größer als eine Dicke der mindestens einen piezoelektrischen Scheibe ist.

2. Konverter nach Anspruch 1, wobei mindestens eine piezoelektrische Scheibe eine Öffnung dadurch hindurch beinhaltet, mit einer wellenförmigen Innenumfangsfläche, sodass eine lineare Distanz entlang der Innenumfangsfläche von einer Kante der Innenumfangsfläche zu der anderen Kante größer als die Dicke der mindestens einen piezoelektrischen Scheibe ist.

3. Konverter nach Anspruch 2, wobei die Innenumfangsfläche mit einer Isolierbeschichtung beschichtet ist.

4. Konverter nach einem der vorhergehenden Ansprüche, wobei die Außenumfangsfläche mit einer Isolierbeschichtung beschichtet ist.

5. Konverter nach Anspruch 1, ferner umfassend:
einen Stapel aus piezoelektrischen Scheiben (24), wie sie in Anspruch 1 definiert werden, abwechselnd gestapelt mit Metallleiterscheiben (16) dazwischen.

6. Konverter nach Anspruch 5, wobei die wellenförmige Außenumfangsfläche der piezoelektrischen Scheiben abgerundet ist.

7. Konverter nach Anspruch 5 oder Anspruch 6, wobei die wellenförmige Außenumfangsfläche der piezoelektrischen Scheiben durch eine Wellenform radial nach außen gebildet ist.

8. Konverter nach einem der vorhergehenden Ansprüche 5 bis 6, wobei die wellenförmige Außenumfangsfläche der piezoelektrischen Scheiben durch eine Wellenform radial nach innen gebildet ist.

9. Konverter nach einem der vorhergehenden Ansprüche 5 bis 8, wobei jede der piezoelektrischen Scheiben eine Öffnung dadurch hindurch beinhaltet, mit einer wellenförmigen Innenumfangsfläche, sodass eine lineare Distanz entlang der Innenumfangsfläche von einer Kante der Innenumfangsfläche zu der anderen Kante größer als die Dicke der mindestens einen piezoelektrischen Scheibe ist.

10. Verfahren der Montage eines Konverters für einen Ultraschallschweißer, umfassend:
Platzieren von mindestens einer piezoelektrischen Scheibe (24) zwischen einer ersten Treiberplatte und einer zweiten Treiberplatte (10, 12), und alles mit einer Vorrichtung (50), wobei die mindestens eine piezoelektrische Scheibe mindestens ein Loch aufweist;
Auftragen einer flüssigen Isolierbeschichtung in dem mindestens einen Loch der piezoelektrischen Scheibe, während die mindestens eine piezoelektrische Scheibe und die erste Treiberplatte und die zweite Treiberplatte durch die Vorrichtung sicher gehalten werden; und
Einführen einer Schraube (18) durch ein Loch in der ersten Treiberplatte, das Loch in der mindestens einen piezoelektrischen Scheibe, und Festziehen der Schraube in eine Gewindebohrung in der zweiten Treiberplatte, um einen montierten Konverter zu erschaffen;
wobei die mindestens eine piezoelektrische Scheibe eine wellenförmige Außenumfangsfläche (26) beinhaltet, sodass eine lineare Distanz entlang der Außenumfangsfläche von einer Kante der Außenumfangsfläche zu der anderen Kante größer als eine Dicke der mindestens einen piezoelektrischen Scheibe ist.

11. Verfahren nach Anspruch 10, ferner umfassend das Auftragen einer flüssigen Isolierbeschichtung auf eine Außenfläche des montierten Konverters.

12. Verfahren nach Anspruch 10 oder Anspruch 11, wobei das Loch in der mindestens einen piezoelektrischen Scheibe eine wellenförmige Innenumfangsfläche aufweist, sodass eine lineare Distanz entlang der Innenumfangsfläche von einer Kante der Innenumfangsfläche zu der anderen Kante größer als eine Dicke der mindestens einen piezoelektrischen Scheibe ist.

## Revendications

1. Convertisseur (206) pour un poste à souder par ultrasons, comprenant :
au moins un disque piézoélectrique (24),
une paire de plateaux d'entraînement (10, 12) disposés aux extrémités opposées de l'au moins un disque piézoélectrique ;
l'au moins un disque piézoélectrique comprenant une surface périmétrique extérieure (26) ondulée telle que la distance linéaire le long de la surface périmétrique extérieure, d'un bord de la surface périmétrique extérieure à l'autre bord, est supérieure à l'épaisseur de l'au moins un disque piézoélectrique.

2. Convertisseur selon la revendication 1, dans lequel au moins un disque piézoélectrique comprend une ouverture le traversant, dotée d'une surface périmétrique intérieure ondulée telle que la distance linéaire le long de la surface périmétrique intérieure, d'un bord de la surface périmétrique intérieure à l'autre bord, est supérieure à l'épaisseur de l'au moins un disque piézoélectrique.

3. Convertisseur selon la revendication 2, dans lequel la surface périmétrique intérieure est recouverte d'un revêtement isolant.

4. Convertisseur selon l'une quelconque des revendications précédentes, dans lequel la surface périmétrique extérieure est recouverte d'un revêtement isolant.

5. Convertisseur selon la revendication 1, comprenant en outre :
un empilement de disques piézoélectriques (24) définis dans la revendication 1, empilés en alternance avec des disques conducteurs en métal (16) intercalés entre eux.

6. Convertisseur selon la revendication 5, dans lequel la surface périmétrique extérieure ondulée des disques piézoélectriques est arrondie.

7. Convertisseur selon la revendication 5 ou la revendication 6, dans lequel la surface périmétrique extérieure ondulée des disques piézoélectriques est formée par une ondulation s'étendant radialement vers l'extérieur.

8. Convertisseur selon l'une quelconque des revendications précédentes 5 et 6, dans lequel la surface périmétrique extérieure ondulée des disques piézoélectriques est formée par une ondulation s'étendant radialement vers l'intérieur.

9. Convertisseur selon l'une quelconque des revendications précédentes 5 à 8, dans lequel chacun des disques piézoélectriques comprend une ouverture le traversant dotée d'une surface périmétrique intérieure ondulée telle que la distance linéaire le long de la surface périmétrique intérieure, d'un bord de la surface périmétrique intérieure à l'autre bord, est supérieure à l'épaisseur de l'au moins un disque piézoélectrique.

10. Procédé d'assemblage d'un convertisseur pour un poste à souder par ultrasons, comprenant :
la disposition d'au moins un disque piézoélectrique (24) entre un premier plateau d'entraînement et un deuxième plateau d'entraînement (10, 12), le tout à l'intérieur d'une monture (50), l'au moins un disque piézoélectrique comprenant au moins un trou,
l'application d'un revêtement isolant liquide à l'intérieur de l'au moins un trou du disque piézoélectrique tandis que l'au moins un disque piézoélectrique, le premier plateau d'entraînement et le deuxième plateau d'entraînement sont maintenus en place par la monture, et
l'insertion d'un boulon (18) dans un trou du premier plateau d'entraînement, dans le trou de l'au moins un disque piézoélectrique, et le serrage du boulon dans un trou fileté du deuxième plateau d'entraînement afin de créer un convertisseur assemblé ;
l'au moins un disque piézoélectrique présentant une surface périmétrique extérieure (26) ondulée telle que la distance linéaire le long de la surface périmétrique extérieure, d'un bord de la surface périmétrique extérieure à l'autre bord, est supérieure à l'épaisseur de l'au moins un disque piézoélectrique.

11. Procédé selon la revendication 10, comprenant en outre l'application d'un revêtement isolant liquide sur une surface extérieure du convertisseur assemblé.

12. Procédé selon la revendication 10 ou la revendication 11, dans lequel le trou de l'au moins un disque piézoélectrique présente une surface périmétrique intérieure ondulée telle que la distance linéaire le long de la surface périmétrique intérieure, d'un bord de la surface périmétrique intérieure à l'autre bord, est supérieure à l'épaisseur de l'au moins un disque piézoélectrique.
